Europäisches Patentamt

European Patent Office

Office européen des brevets

(11) Publication number: **0 176 802**
A2

(12) # EUROPEAN PATENT APPLICATION

(21) Application number: **85111270.6**

(22) Date of filing: **06.09.85**

(51) Int. Cl.⁴: **G 11 B 15/665**

(30) Priority: **10.09.84 JP 187918/84**

(43) Date of publication of application:
**09.04.86 Bulletin 86/15**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Nagai, Kyuichiro**
**231, Yorii Apartment 391-2, Tabiko**
**Katsuta-shi Ibaraki-ken(JP)**

(72) Inventor: **Ogiro, Kenji**
**1004-10, Shimokurata-cho Totsuka-ku**
**Yokohama-shi Kanagawa-ken(JP)**

(72) Inventor: **Kaku, Nobuyuki**
**1076-1-401, Gumizawa-cho Totsuka-ku**
**Yokohama-shi Kanagawa-ken(JP)**

(74) Representative: **Altenburg, Udo, Dipl.-Phys. et al,**
**Patent- und Rechtsanwälte**
**Bardehle-Pagenberg-Dost-Altenburg-Frohwitter &**
**Partner Postfach 86 06 20**
**D-8000 München 86(DE)**

(54) **Tape loading system.**

(57) A first tape guiding plate positioned close to a cylinder on a tape entrance side and a second tape guiding plate positioned closer to a supplying reel than the first tape guiding plate, are connected to a loading ring, and a connecting part of the second tape guiding plate to the loading ring is movable along the loading ring. The distance along the loading ring between the connecting parts of the second and first tape guiding plates to the loading ring is variable. The distance between the first and second tape guiding plates can be set sufficiently long during loading and sufficiently short during unloading.

EP 0 176 802 A2

./...

FIG. 1

Hitachi, Ltd.                    - 1 -                    September 16, 1985
6, Kanda Surugadai 4-chome                               N 6524-EP      ti
Chiyoda-ku, Tokyo, 101, Japan

D e s c r i p t i o n

Title of the Invention

TAPE LOADING SYSTEM

## Background of the Invention

The present invention relates to the magnetic recording and reproducing equipment applying the helical scan method and more particularly to a tape loading system suitable for realizing higher density recording and thinner bodies for the magnetic recording and reproducing equipment.

Conventionally, magnetic recording and reproducing equipment applying the helical scan method can automatically load magnetic tapes eliminating the complicated manual loading process for magnetic tapes by setting up a cassette loading system which places the tape cassette with the magnetic tape inside to a fixed position, and a tape loading system which extracts the magnetic tape out of the tape cassette placed at a specified position and winds around the rotating cylinder or places the magnetic tape wound around the rotating cylinder into the tape cassette.

Although various ideas have been suggested for the tape loading system, the strongly anticipated increase in the recording time makes it necessary to employ ultra-thin magnetic tapes approximately 10 μm, and therefore, the tape loading system must be made so as to run the ultra-thin magnetic tape stably and with no extra strain.

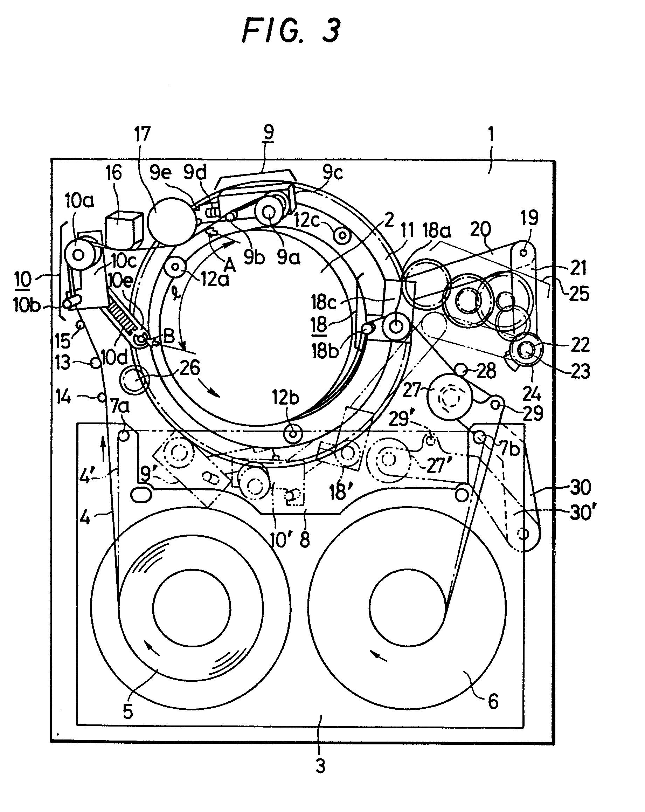

The inventors of the present invention previously have proposed a tape loading system which has taken in consideration the imposed problems. The proposed system is shown in Fig. 3.

In this figure, reference numeral 1 denotes a chassis, 2 a cylinder, 3 a tape cassette, 4 a magnetic tape, 5 a supplying reel, 6 a take-up reel, 7a and 7b denote guiding pins, and 8 denotes an opening. Reference numeral 9 designates a tape guiding plate, 9a a guide roller, 9b a inclination pin, 9c a guide base, 9d a spring for compression, 9e a connecting part, 10 a tape guiding plate, 10a a guide roller, 10b an inclination pin, 10c a guide base, 10d a spring for compression, and 10e a connecting part. Reference numeral 11 denotes a loading ring, 12a, 12b, 12c denote guiding rollers, 13 denotes a tension pin, 14, 15 denote guide pins, 16 denotes a full width erasing head, and 17 a impedance roller. Reference numeral 18 designates a tape guiding plate, 18a a guide roller, 18b an inclination pin, and 18c a guide base. Reference numeral 19 denotes a pin, 20, 21 denote arms, 22 denote a twisted spring for compression, 23 a spindle, 24 a gear, and 25 a reduction gear line. Reference numeral 26 designates a driving gear, 27 a pinch roller, 28 a capstan, 29 an assistant guide, and 30 a driving arm.

In Fig. 3 cylinder 2 is inclined at a specified angle and attached to the chassis 1. The loading ring 11 is attached so that it can rotate around cylinder 2 by the guiding rollers 12a, 12b and 12c, and rotates by a driving force transferred from a loading motor which is not shown in the figure, through the driving gear.

This loading reing 11 has the tape guiding plates 9 and 10 for guiding the tape to an entrance side of cylinder 2 (referred to below as tape entrance side). The tape guiding plate 9 consists of the guide base 9c on which the guide roller 9a and the inclination pin 9b are mounted at a relevantly specified position, the connecting part 9e which is attached to the loading ring 11 while enabling rotation, and the spring for compression 9d attached in the connecting part 9e. The guide base 9c is mounted on the connecting part 9e while enabling sliding movements and is pressed into position by the spring 9d. At the same time, the tape guiding plate 10 consists of the guide base 10c on which the guide roller 10a and the inclination pin 10b are mounted at a relevantly specified position, the connecting part 10e which is attached to the loading ring 11 while enabling rotation, and the spring for compression 10d attached in the connecting part 10e. The guide base 10c is mounted on the connecting part 10e while enabling sliding movements and is pressed into position by the spring 10d. These guiding plates 9 and 10 respectively move when the guide bases 9c and 10c are guided along the guiding groove (not shown in the figure) prepared on the chassis 1, accompanied by the rotation of the loading ring 11.

On the other hand, the spindle 23 is planted in the chassis 1. The gear 24 and arm 21 are attached to this spindle 23 while enabling rotation and are linked to each other by the twisted spring for compression 22. The gear 24 is linked with the loading ring 11 by the reduction gear line 25, and the arm 21 has arm 20 attached to it by pin 19 to enable rotation. Furthermore, for guiding the tape to exit side of the cylinder 2 (referred to below as tape exit side), this arm 20 has the tape guiding plate 18 which consists of the guide base 18c carrying guide roller 18a and inclination pin 18b, attached while enabling circulation. When the loading ring 11 rotates, the rotating force is transferred to the gear 24 through the reduction gear line 25. As the gear 24 rotates, arm 21 followed by arm 20 circulates by the twisted spring for compression 22. With this movement, the guide base 18c is guided by the guiding grooves (not shown in the figure) prepared on the chassis 1 which in turn moves the tape guiding plate 18.

Furthermore, on the tape entrance side, the guide pins 14 and 15, and the full width erasing head 16 are each secured into position, and the impedance roller 17 is placed into position while enabling rotation, and the tension pin 13 is attached to the circulable tension arm (not shown in the figure). On the tape exit side, the capstan 28 rotated by a capstan motor which is not shown in the figure, and the driving arm 30 prepared with the pinch roller 27 and the assistant guide 29, are attached while enabling circular movements. A voice signal recording and reproducing head and a control head are omitted from this figure.

The movements of this tape loading system is described next.

When the tape cassette 3 is not loaded, the tape guiding plates 9, 10 and 18, the pinch roller 27, and the assistant guide 29 are in the positions shown by the two dotted chain line with a dash on each of their reference numerals. The tape cassette 3 has the opening 8 and the magnetic tape 4 takes the position denoted by reference numeral 4', shown by the two dotted chain line between the supplying reel 5 and take-up reel 6, through the guiding pins 7a and 7b.

When this tape cassette 3 is loaded as in the figure, the supplying reel 5 and the take-up reel 6 are each placed on the reel stand provided on the chassis 1 and the tape guiding plates 9', 10' and 18', the pinch roller 27' and the assistant guide 29' are all positioned on the inner side of the magnetic tape 4' in the opening 8. When the recording or reproducing mode is decided, the loading motor (not shown in the figure) rotates so that the loading ring 11 rotates and the tape guiding plates 9, 10 and 18 move along the guide groove (not shown in the figure) prepared on the chassis 1, and the driving arm 30 circulates, moving the pinch roller 27 and the assistant guide 29 in turn. At this time, the guide rollers 9a, 10a and 18a, and the inclination pins 9b, 10b and 18b, of the respective tape guiding plates 9, 10 and 18, and the pinch roller 27 and the assistant guide 29, all catch the magnetic tape 4 pulling it out of tape cassette 3.

The guide bases 9c, 10c and 18c are each pressed to a stopper which is not shown in the figure, by the spring for compression 9d and 10d, and the twisted spring for compression 22, respectively, to place the tape guiding plates 9, 10 and 18, respectively, to the specified position shwon in the figure by solid lines. When this is completed, the magnetic tape 4 is wound spirally around cylinder 2 for a specified angle and is held between the pinch roller 27 and the capstan 28. At this state, magnetic tape 4 contacts guide pins 14 and 15, the full width erasing head 16, the impedance roller 17, the fixed magnetic heads such as the voice signal recording and reproducing head which are not shown in the figure, forming the running line of the magnetid tape 4, as shown in the figure by solid lines. At the same time, the tension pin 13 contacts the magnetic tape 4 by the circular movements of the tension arm which is not shown in the figure. The above movements are the loading movements.

It is noted that the guide pin 14 prevents the magnetic tape 4 from touching the edges of the tape outlet of the tape cassette 3, and the guide pin 15 ensures that the winding of the magnetic tape 4 to the inclination pin 10b of the tape guiding plate 10 is sustained at a specified angle. It is also noted that the tape guiding plates 9 and 18 are made to differ in the distance in which they move, thus the tape guiding plate 18 is not connected to the loading ring 11, but by driving it through the reduction gear line 25, and can move the specified distance.

When the capstan 28 rotates by the capstan motor which is not shown in the figure, the magnetic tape 4 runs at the specified speed and the recording or reproducing is made by the rotating magnetic head (not shown in the figure) mounted on cylinder 2. At this time, the impedance roller 17 absorbes any vibration in the longitudinal direction of the magnetic tape 4 regulating the scanning speed of the magnetic tape 4, and the tension pin 13 detects any tension in the magnetic tape 4, drives the back tension supplement apparatus attached to the reel stand (not shown in the figure) on which the supplying reel 5 is loaded and regualtes the tension applied to the magnetic tape 4. Although the running speed of the magnetic tape 4 is controlled by the control signals reproduced from the control head which is not shown in the figure, the control head can be eliminated when the running speed of the magnetic tape 4 is controlled by the pilot signals doubly reproduced with video signals and voice signals by the rotating magnetic head.

The winding angle of the magnetic tape 4 to the cylinder 2 is determined by the guide rollers 9a and 18a of the tape guiding plates 9 and 18, respectively. The magnetic tape 4 touches the surface of the inclined cylinder 2 from the guide roller 9a, then runs guided by a lead (not shown in the figure) prepared in the cylinder 2 and leaves cylinder 2 to change its running direction by the guide roller 18a of the tape guiding plate 18.

Here the magnetic tape 4 extracted from the supplying reel 5 and that being taken up by the take-up reel 6 both have the same height from the chassis 1 and the plane of the magnetic tape 4 is vertical to the chassis 1. The magnetic tape 4 which runs in such a condition must directly touch the surface of the cylinder inclined to the chassis 1. Therefore, the inclination pins 9b and 10b are prepared in the tape guiding plates 9 and 10, respectively, on the tape entrance side, so that the plane of the magnetic tape 4 inclines to become parallel to the surface of the cylinder 2, allowing the magnetic tape 4 to touch the surface of the cylinder 2, directly, without any strain. On the tape exit side, the inclination pin 18b is prepared in the tape guiding plate 18 to change the plane of the magnetic tape 4 from being parallel to the surface of cylinder 2 into being parallel to the vertical surface of the chassis 1 and to make the height of the magnetic tape 4 from the chassis 1 when it is being taken up by the take-up reel 6, the same as when it is extracted from the supplying reel 5.

At the unloading, which places the magnetic tape 4 wound around the cylinder 2 into the tape cassette 3, each part makes the opposite movement to that mentioned above, thereby the magnetic tape 4 is taken up by either the supplying reel 5 or the take-up reel 6.

It is necessary to sustain the contact pressure of the magnetic tape 4 on the rotating magnetic head above a specified value so that this rotating magnetic head mounted on the cylinder 2 can record and reproduce well. Therefore, the back tension is provided to the reel stand carrying the

- 9 -    0176802

supplying reel 5 to cause the specified tension on the magnetic tape 4. However, when the magnetic tape 4 is 10 μm and ultra-thin, the tape tension must be kept as small as possible, that is between 10 - 15gF at the start of the tape winding at the cylinder 2. On the other hand, in order to improve the control characteristics, the back tension provided on the above mentioned reel stand should be as large as possible. In order to satisfy these two conditions, the increase of the tape tension on the tape entrance side must be suppressed.

Therefore, in the tape loading system, the winding angle of the magnetic tape 4 to the fixed guide which has a large folding resistance must be suppressed as small as possible, and the winding angle of the magnetic tape 4 to the rotationable guide rollers 9a, 10a and 18a which have very little effect on the load of the magnetic tape 4 should be large. The running direction of the magnetic tape 4 is changed by these guide rollers. In consequence, the winding angle of the magnetic tape 4 to the inclination pins become smaller, and since the plane of the magnetic tape 4 cannot be sufficiently inclined with only the inclination pin 9b provided on the tape guiding plate 9, inclination pin 10b is provided on the tape guiding plate 10 to incline the magnetic tape 4 at a larger angle. At the same time, on the tape exit side the winding angle of the magnetic tape 4 to the inclination pin 18b of the tape guiding plate 18 is made as small as possible to suppress the increase of the tape tension on the magnetic tape 4 as low as possible, on the tape running route between the point where the tape leaves cylinder 2 and the point where the capstan 28 and pinch roller 27 hold the tape.

The longer the distance magnetic tape 4 runs between the inclination pins 9b and 10b, that is the longer the distance $\ell$ along the loading ring 11 between the connecting points of the connecting parts 9e and 10e to the loading ring 11, shown in the figure by arrows A and B, respectively, is, the smaller the winding angle becomes for the magnetic tape 4 to the inclination pins 9b and 10b, in order to incline the plane of magnetic tape 4 to a specified angle.

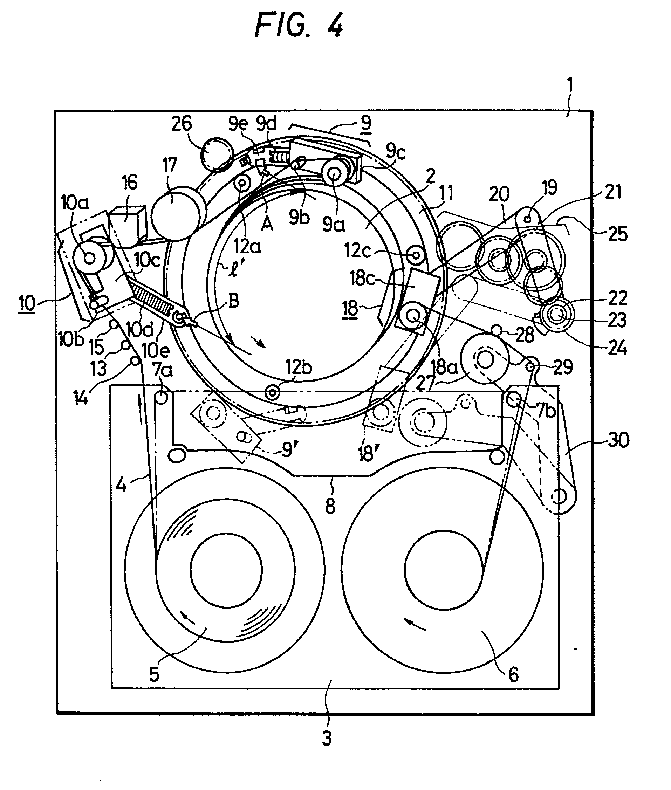

When this distance $\ell$ is small, the tape guiding plates 9 and 10 can be stored in the limited space of the opening 8 in the tape cassette 3 during unloading. However, when this distance $\ell$ becomes large, the tape guiding plastes 9 and 10 cannot be stored in the opening 8 of the tape cassette 3. Although this becomes a large problem for magnetic recording and reproducing equipment using small compact tape cassettes with small opening areas, it also becomes a very large problem for thinner magnetic recording and reproducing equipments which are specially in demand recently. Therefore, this point is explained using Fig. 4. The same reference numerals are used for the corresponding parts shown in Fig. 3. Fig. 4 shows an another tape loading system which have been proposed by the inventors of the present invention, previously.

The family magnetic recording and reproducing equipment used at present is usually constructed with a cylinder motor directly connected under the cylinder. The thickness of these magnetic recording and reproducing equipment are determined by the height of the entire cylinder including the cylinder motor.

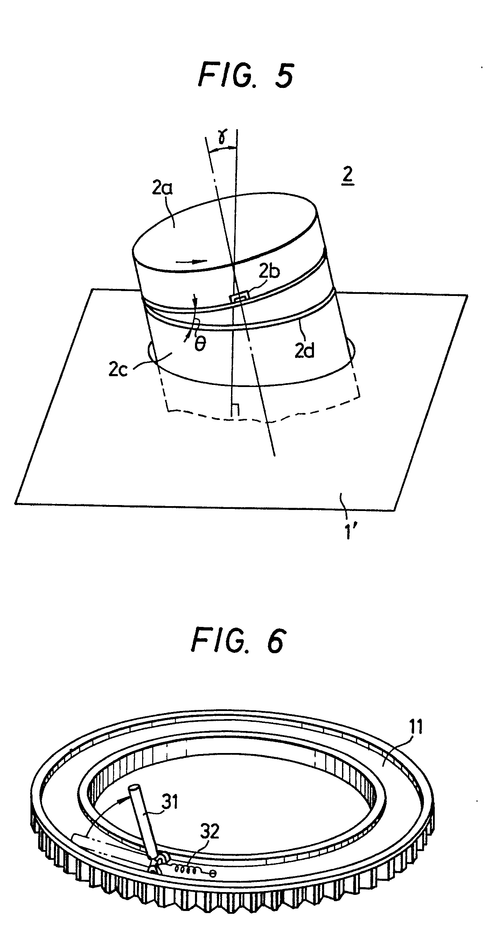

As shown in Fig. 5, cylinder 2 is inclined at a specified angle $\gamma$ to the standard plane 1' which is parallel to the chassis 1 (Fig. 3) and the actual height cylinder 2 accounts for is more that the substantial height from the very top plane of cylinder 2 to the very bottom plane of the directly connected cylinder motor beneath is. Therefore, in order to make the magnetic recording and reproducing equipment thinner, the above mentioned inclination angle $\gamma$ must be minimized to bring the height accounted for the entire cylinder 2 close to the substantial height of the entire cylinder 2.

The angle made by the rotation plane of the upper cylinder 2a which rotates at a specified speed in the direction of the arrow, carrying the rotating magnetic head 2b and the lead 2d which is prepared on the fixed lower cylinder 2c and controls the magnetic tape route is called the lead angle $\theta$. The lead angle $\theta$ is a constant angle determined by the diameter of the cylinder 2, the width of the magnetic tape and the winding angle of the magnetic tape to the cylinder 2.

In Fig. 4, cylinder 2 is inclined to the standard plane 1' at lead angle $\theta$ so that the magnetic tape leaving cylinder 2 becomes parallel to the chassis 1. That is, $\mathcal{T}$ = 0. Therefore, at the tape exit side, the inclination pin becomes unnecessary and only the guide roller 18a is placed in the tape guiding plate 18. On the other hand, the set up in Fig. 3 is $\mathcal{T}$ = 2θ. Therefore, the inclination angle $\mathcal{T}$ of cylinder 2 in Fig. 4 is smaller than that in Fig. 3.

However, as the inclination angle $\mathcal{T}$ of the cylinder becomes smaller, the difference in the height position of the magnetic tape at the entrance side and exit side becomes larger. In Fig. 4, the magnetic tape 4 sustains the same height position after leaving cylinder 2 until it is taken up in the take-up reel 6, that is the amount of return for the tape height position magnetic tape 4 has to under to at the tape entrance side becomes larger than that in Fig. 3. This return of the tape height position is made by the tape guiding plates 9 and 10. Therefore, the distance $\ell'$ between the point of connection of the connecting part 9e of the tape guiding plate 9 to the loading ring 11 (arrow A) and the point of connection of the connecting part 10e of the tape guiding plate 10 to loading ring 11 (arrow B) becomes much longer. As described before, this means that the tape guiding plates 9 and 10 cannot be stored in the opening 8 of the tape cassette 3.

In Fig. 4, the tape guiding plates 9 and 18 are shown by the two dotted chain line to be stored in the opening 8 of the tape cassette 3 at the time of unloading, but when these two tape guiding plates 9 and 18 are stored, the tape guiding plate 10 bumps into the tape guiding plate 18 and therefore, the three tape guiding plates cannot be stored in the opening 8.

When numbers of inclination pins are connected to the loading ring and when the distance along the loading ring between the connection points is relatively long, one of the methods to store the numbers of inclination pins at the unloading time is shown in Fig. 6. Reference numeral 11 designates the loading ring, 31 the inclination pin and 32 the tension spring, in the figure.

In this method, the inclination pin 31 is pushed down to be stored in the loading ring 11 during unloading. This inclination pin is woken within the opening (not shown in the figure) of the tape cassette by the tension spring 32 with the rotation of the loading ring 11, and pulls out the magnetic tape (not shown in the figure) during loading. At the completion of loading, this inclination pin 31 is pressed onto a part fixed at a specified position.

However, as shown in Fig. 4, guide rollers are also necessary in the tape guiding plate to change the running direction of the magnetic tape. Since the guide rollers need to be kept far apart, in order to make the magnetic recording and reproducing equipment thin, it becomes difficult to secure the space necessary to store the guide rollers. Therefore, this method cannot be employed.

Again, in Fig. 4, the tape guiding plate 10 on the tape entrance side and the loading ring are connected by a link with two arms jointed together so that they can each rotat.,
The idea of having the distance between the tape guiding
plates 9 and 10 long during loading and short during unloading is possible but not probable since a mechanism for such
movement is complicated and smooth loading movements will be
difficult to realize.

As described above, the problem of storage of the tape
guiding plates during unloading into the opening of the tape
cassette is preventing the creation of high density recording
and thin magnetic recording and reproducing equipment using
ultra-thin magnetic tape. It becomes a crucial problem when
considering magnetic recording and reproducing equipment
using compact tape cassettes.

Summary of the Invention

An object of the present invention is to solve such problems and to provide a tape loading system which can differ
the distances between tape guiding plates during loading and
unloading with a simple mechanism.

The above object is accomplished according to the present invention by providing a tape loading system which
comprises:

a first tape guiding plate which is directly connected
to a loading ring, is moved by a rotation of the loading
ring and is positioned near the cylinder at the completion
of loading; and

a second tape guiding plate which is connected to the
loading ring through the medium of a movable part in relation to the loading ring, is moved by the rotation of the loading ring and is positioned nearer a tape reel than that the first tape guiding plate is positioned;

so that a distance between the first and second tape guiding plates is allowed to differ between the completion of loading and unloading.

According to the present invention, the distance between the first and second tape guiding plates can be set sufficiently long during loading and sufficiently short during unloading so that the first and second tape guiding plates can be stored in the space specified in the opening of the tape cassette.

Brief Description of the Drawings

Fig. 1 is a plan view of a tape loading system according to an embodiment of the present invention;

Figs. 2A and 2B are plan views of the principal parts in Fig. 1, illustrating the movement thereof;

Fig. 3 is a plan view of a tape loading system suitable for the use of ultra-thin magnetic tape;

Fig. 4 is a plan view of a tape loading system for illustrating the problems when thinner magnetic recording and reproducing equipments are required;

· Fig. 5 is a view for explaining the inclination angle of a cylinder in respect to a chassis; and

Fig. 6 is a perspective view of an example of a tape guiding plate for conventional tape loading system.

0176802

## Detailed description of preferred Embodiment

The embodiment of the present invention is explained below referring diagrams.

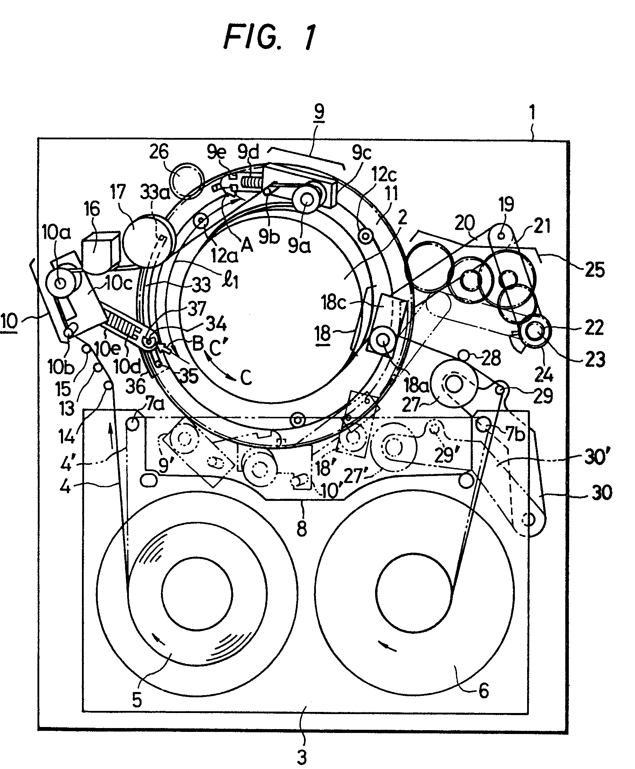

Fig. 1 show the plan view of one of the tape cassette mechanism embodying the present invention where reference numeral 33 denotes a long hole, 34 and 35 designate shafts, 36 denotes a base and the same reference numerals are used for those parts corresponding to those in Fig. 3 and overlapping explanations are omitted.

In Fig. 1, the long hole 33 is opened along the circumferential direction in the loading ring 11. The shafts 34 and 35 are inserted in this long hole 33 and are planted into the base 36. Therefore, the base 36 can move along this long hole 33 while being sustained at a constant set up position in respect to the loading ring 11. At the same time, the connecting part 10e of the tape guiding plate 10 is attached to the part of the shaft 34 stretching out from the base 36 so that the connecting part 10e can circulate.

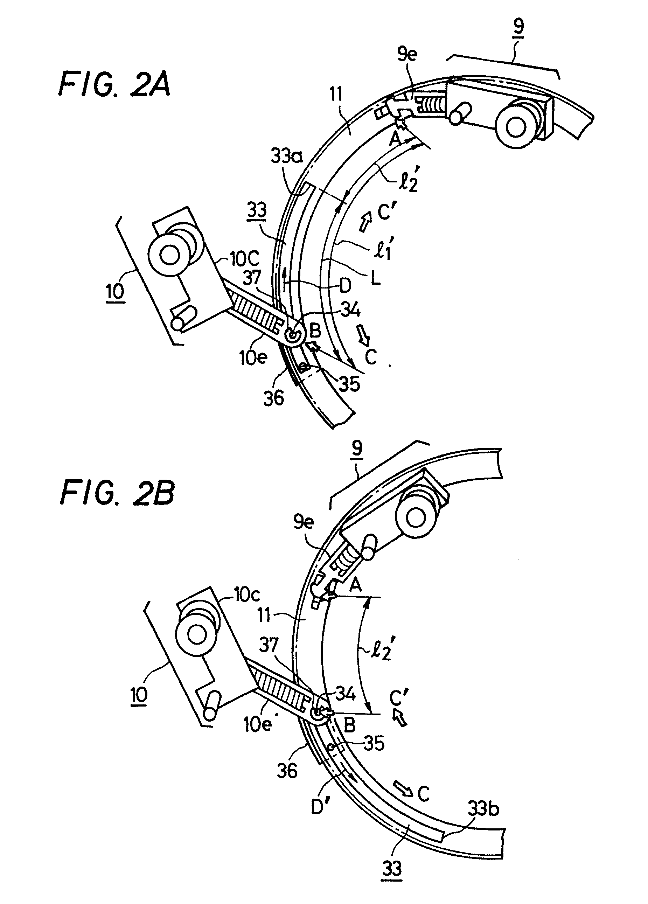

The movements of this embodiment is described next using Figs. 2A and 2B. Figs. 2A and 2B show the completed situation of loading and unloading respectively, where 33a and 33b designate the ends of the long hole 33, and 37 denotes the stopper (for example an E ring) to stop the connecting part 10e from slipping off. All the other reference numerals correspond to the same parts shown in Fig. 1

At the completion of loading, the shaft 35 planted in base 36 contacts the end 33b (not shown in Fig. 2A), refer to 2B of the long hole 33 and therefore, the distance between the attaching point (arrow B) of the connecting part 10e to shaft 34 and the attaching point (arrow A) of the connecting part 9e to the loading ring 11 is at its maximum, $l_1'$. The solid lines in Fig. 1 show the position of each part at this situation and the distance between the tape guiding plates 9 and 10 is sufficiently long. In this situation, the tape guiding plates 9 and 10 are pressed into position by stoppers which are not shown in the figure, but tape guiding plate 10 is especially sustained by a suitable sustaining part which is not shown in the figure. The sustaining part is made in the stopper and for instance, it can be done by holding a pin (not shown in the figure) inserted into the guiding groove and planted in the guide base which allow the tape guiding plate 10 to move along the grooves (not shown in the figure) prepared in the chassis.

When unloading starts and the loading ring 11 starts rotating in the direction of arrow C, the tape guiding plate 9 which is directly attached to the loading ring 11 by the connecting part 9e, starts moving with the rotation of the loading ring 11. However, since the tape guiding plate 10 is sustained by the above method, the base 36 moves in the direction of arrow D, compared to the loading ring 11, along the long hole 33 when the loading ring 11 starts to rotate. As a result, the attached position of the connecting part 9e, shown by arrow A comes closer to the attached position of the connecting part 10e, shown by arrow B, and the distance between the tape guiding plates 9 and 10 is gradually decreased.

The shaft 34 planted in the base 36 finally contacts the other end 33a of the long hole 33 to be in the same situation as that shown in Fig. 2B where tape guiding plate 10 becomes free from the sustained position and moves with the rotation of the loading ring 11. At this time, the distance between the attached point of the connecting parts 9e and 10e shown by the arrows A and B, respectively, is at its minimum $l_2'$, and the distance between the tape guiding plates 9 and 10 is also at its minimum.

Since the distance between the tape guiding plates 9 and 10 is determined by the distance between the attached position (shown by arrow A) of the connecting part 9e of the tape guiding plate 9 to the loading ring 11 and the end 33a of the long hole 33 in the loading ring 11 (that is the distance $l_2'$), the tape guiding plates 9 and 10 can be drawn closer so that they can be stored in the specified space in the opening of the tape cassette by specifying this distance appropriately.

In Fig. 1, as in Fig. 3, the positions of parts such as the tape guiding plates 9, 10 and 18, at the unloading situation is shown by two dotted chain lines, the reference numerals are dashed, and the tape guiding plates 9 and 10 are stored in the specified space in the opening 8 of the tape cassette 3. Even during this unloading situation, the tape guiding plate 10 is sustained by an appropriate method which is not shown in the figure.

When the loading movements start from the unloading situation, the loading ring 11 rotates in the direction of arrow C'. When only the positions of the connecting parts 9e and 10e in relation to the loading ring 11 at the unloading situation is observed, it is the same as that shown in Fig. 2B.

As the loading ring 11 rotates in the direction of arrow C', the tape guiding plate 9 also starts to move. However, since the tape guiding plate 10 is sustained by the above mentioned method, the base 36 moves in the direction of arrow D', compared to that of the loading ring 11, along the long hole 33 as the loading ring 11 rotates. Therefore, the distance between the connecting parts 9e and 10e gradually increases and the tape guiding plate 9 gradually moves away from the tape guiding plate 10.

Finally, the shaft 35 planted in base 36 contacts the end 33b of the long hole 33 to be in the same situation as that shown in Fig. 2A. Then the tape guiding plate 10 also moves with the loading ring 11 rotating in the direction of arrow C'. When the loading ring 11 rotates further, the tape guiding plates 9 and 10 are pressed by stoppers not shown in the figure, and the loading movements are completed, and each part is in the position shown by the solid lines in Fig. 1.

The distance $l_1'$ between the connecting parts 9e and 10e at the completion of loading, that is the distance between the tape guiding plates 9 and 10 is decided by the length L (= $\ell_1'$ - $\ell_2'$) of the long hole 33 in the loading ring 11. By specifying this length L, the distance between the tape guiding plates 9 and 10 can be sufficiently widen to run the magnetic tape 4 smoothly with a suitable tension given to it even when the cylinder 2 is vertically attached to the chassis 1 and ultra-thin magnetic tape approximately 10 μm thick is used.

When the distance between the tape guiding plates 9 and 10 can differ between the loading completion and unloading completion states, and can be specified by the length of the long hole 33, or its position in relation to the loading ring 11, ultra-thin magnetic tape approximately 10 μm thick can be used and the cylinder 2 can be vertically attached to the chassis 1, which in turn makes it possible for higher density recording and thinner bodies for the magnetic recording and reproducing equipment, and the tape guiding plates 9 and 10 can be easily stored in a specified space in the opening of the tape cassette even when the tape cassette is compact.

The attachment part (that is the base 36) of the tape guiding plate 10 to the loading ring 11 is made movable in relation to this loading ring 11 and a simple mechanism and movement that the tape guiding plate 10 starts moving after the tape guiding plate 9 with the rotation of the loading ring 11 is fabricated. Thus, the distance between the tape guiding plates 9 and 10 differ between the completion of loading and unloading, and the movements of the tape guiding plates 9 and 10 during loading and unloading can be made smoothly.

Furthermore, although in the above embodiment the case of two tape guiding plates 9 and 10 positioned on the tape entrance side is described, it is needless to say that the present invention can be applied to the case with two tape guiding plates positioned on the tape exit side.

As described above, with this invention, the distance between the two tape guiding plates placed on the same side of the cylinder can be easily changed to suit the completion of both the loading and unloading, by using a simple structure and thus, the use of ultra-thin magnetic tape approximately 10 μm thick and the vertical position of the cylinder in relation to the chassis become possible, and in effect it improves the function of the magnetic recording and reproducing equipment, to allow longer recording time and thinner equipment.

0176802

## C l a i m s

1.  A tape loading system wherein a magnetic tape is extracted from a tape cassette and wound for a predetermined angle around a cylinder, and the magnetic tape is removed from the cylinder and placed back into the tape cassette, comprising:

  a first tape guiding plate which is directly connected to a loading ring, is moved by a rotation of the loading ring and is positioned near the cylinder at the completion of loading; and

  a second tape guiding plate which is connected to the loading ring through the medium of a movable part in relation to the loading ring, is moved by the rotation of the loading ring and is positioned nearer a tape reel than that the first tape guiding plate is positioned;

so that a distance between the first and second tape guiding plates is allowed to differ between the completion of loading and unloading.

  2.  A tape loading system according to claim 1, wherein said movable part in relation to the loading ring comprises:

  a long hole prepared in said loading ring;

  a base connected to said second tape guiding plate; and

  a shaft planted in the base and inserted in the long hole while being movable.

FIG. 1

**FIG. 2A**

**FIG. 2B**

# FIG. 3

FIG. 4

0176802

# FIG. 5

# FIG. 6